## Europäisches Patentamt

## European Patent Office

## Office européen des brevets

(19)

(11) Veröffentlichungsnummer: **0 038 410**
**B1**

(12) # EUROPÄISCHE PATENTSCHRIFT

(45) Veröffentlichungstag der Patentschrift:
01.08.84

(51) Int. Cl.³: **B 01 D 53/04,** F 04 B 37/02,
F 04 C 18/12

(21) Anmeldenummer: 81101313.5

(22) Anmeldetag: 24.02.81

(54) Vorrichtung zur Trennung oder fraktionierenden Reinigung von Gasgemischen.

(30) Priorität: 18.04.80 DE 8010651 U

(43) Veröffentlichungstag der Anmeldung:
28.10.81 Patentblatt 81/43

(45) Bekanntmachung des Hinweises auf die Patenterteilung:
01.08.84 Patentblatt 84/31

(84) Benannte Vertragsstaaten:
BE FR GB IT NL SE

(56) Entgegenhaltungen:
DE - A - 2 720 286
GB - A - 1 443 973
US - A - 3 338 030
US - A - 4 215 977

(73) Patentinhaber: Leybold-Heraeus GmbH, Bonner
Strasse 504 Postfach 51 07 60, D-5000 Köln 51 (DE)

(72) Erfinder: Amlinger, Heinrich, Ing. grad.,
Johann-Schmidt-Strasse 12, D-6361 Niddatal 2 (DE)

(74) Vertreter: Leineweber, Jürgen, Dipl.-Phys., Bonner
Strasse 504 Postfach 51 07 60, D-5000 Köln 51 (DE)

ACTORUM AG

## Beschreibung

Vorrichtung zur Trennung oder fraktionierenden Reinigung von Gasgemischen.

Die Erfindung bezieht sich auf eine Vorrichtung zur Trennung oder fraktionierenden Reinigung von Gasgemischen nach dem Druckwechsel-Prinzip mit mindestens zwei, vorzugsweise drei Adsorbern, die während ihrer Adsorptionsphase mit Überdruck und während ihrer Desorptionsphase mit Unterdruck betrieben werden und denen ein mit Ventilen sowie Förder- und Vakuumpumpeinrichtungen ausgerüstetes Leitungssystem zugeordnet ist.

Eine Vorrichtung dieser Art ist z.B. aus der US-PS 3 338 030 bekannt.

Mit Vorrichtungen dieser Art ist es möglich, Kohlenwasserstoffe aus wasserstoffreichem Prozessgas zu entfernen oder Luft in Sauerstoff und Stickstoff zu zerlegen. Dabei wird die Tatsache ausgenutzt, dass gewisse Gase an bestimmten Adsorptionsmaterialien, z.B. Zeolith, vorzugsweise adsorbiert werden. Die Adsorption findet in der Regel bei Drücken zwischen Atmosphärendruck und maximal ca. 15 bar statt. Die Desorption findet bei Druckentlastung auf leichten Überdruck, Atmosphärendruck oder bis ins Grobvakuum statt. Es hat sich gezeigt, dass mit solchen Vorrichtungen am wirtschaftlichsten gearbeitet werden kann, in denen bei relativ niedrigem Überdruck adsorbiert und bei Vakuum desorbiert wird.

Der Erfindung liegt die Aufgabe zugrunde, eine Vorrichtung der eingangs genannten Art zu schaffen, die für die erwähnte wirtschaftliche Betriebsweise (Adsorption bei relativ niedrigem Überdruck, Desorption unter Vakuum) besonders geeignete Komponenten aufweist.

Erfindungsgemäss wird diese Aufgabe dadurch gelöst, dass die Förder- und Vakuumpumpeinrichtungen als Rootsgebläse bzw. Rootspumpen ausgebildet sind und dass die der Vakuumerzeugung dienenden Rootspumpen mit einer Vor-Einlass-Kühlung ausgerüstet sind. Rootsgebläse haben den Vorteil, dass sie nur einen solchen Druck aufbauen, der ihnen als Widerstand entgegengebracht wird. Da infolge der Prozessführung unterschiedliche Druckverluste für das Frischgasgebläse und das Spülgasgebläse entstehen, diese Gase aber an der Stelle, wo Frisch- und Spülgase in den Adsorber eintreten, zusammengeführt werden müssen, ist eine derartige Eigenschaft von besonderem Vorteil. Mit ihr kann ohne zusätzliche Regelung die Druckgleichheit der Eintrittsgase gewährleistet werden. Die Verwendung von Rootspumpen als Vakuumpumpen ist ebenfalls vorteilhaft. Rootspumpen sind ölfrei und zeichnen sich im Vergleich zu den sonst üblichen Wasserringpumpen durch grosse Lebensdauer und grosse Durchsatzleistung aus, so dass die für die Desorption unter Vakuum notwendigen Abpumpzeiten kleingehalten werden können.

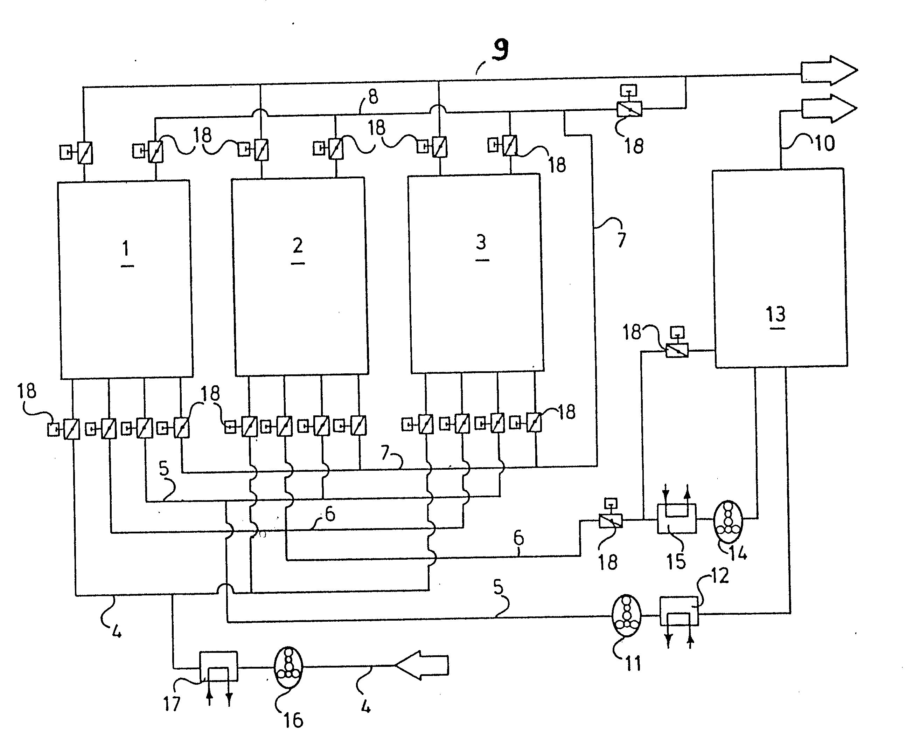

Vorteile und Einzelheiten der Neuerung sollen anhand eines in der Figur schematisch dargestellten Ausführungsbeispiels für die Stickstofferzeugung erläutert werden.

Das Ausführungsbeispiel weist drei Adsorber 1, 2 und 3 auf, in denen sich ein Adsorptionsmaterial (Zeolith, Molekularsieb oder dergleichen) befindet. An die Adsorber sind eine Reihe von Leitungen angeschlossen, die im einzelnen die folgenden Funktionen haben: Die Leitungen 4 dienen dem Einlass und der Zufuhr von Luft. Die Leitungen 5 führen desorbiertes Gas über die Vakuumpumpe 11 und die Kühleinrichtung 12 einem Reservoir 13 zu. Mit 6 ist die Spülgasleitung bezeichnet, in der Spülgas über das Spülgebläse 14 und die Kühleinrichtung 15 einem der jeweils der Spülung unterworfenen Adsorber 1, 2 oder 3 zugeführt wird. Mit 7 ist die Spülgas-Rückführungsleitung bezeichnet, die schliesslich in die Leitung 9 für die sauerstoffreiche Fraktion mündet. Von der Leitung 9 für die sauerstoffreiche Fraktion führt die Leitung 8 zu den Adsorbern. Über diese Leitung 8 erfolgt jeweils die Füllung der Adsorber während des jeweiligen Füllvorganges. Mit 10 ist die Leitung für das abzuführende Stickstoff-Produkt bezeichnet. In der Lufteinlassleitung ist das Luftgebläse 16 und die diesem zugeordneten Kühreinrichtung 17 eingeschaltet.

Diese die Adsorber 1, 2 und 3 versorgenden Leitungen sind mit Ventilen ausgerüstet, die sämtlich mit 18 bezeichnet sind. Sie werden in bekannter, nicht dargestellter Weise so gesteuert, dass wechselweise nacheinander in den Adsorbern 1, 2 und 3 die Schritte «Adsorption», «Spülen», «Desorbieren» und «Füllen» ablaufen. Als besonders vorteilhaft hat sich erwiesen, dass diese Ventile 18 als Klappenventile oder Absperrklappen ausgebildet sind, wodurch eine hohe Lebensdauer und eine besonders gute Funktionssicherheit gewährleistet sind.

Die Vakuumpumpe 11 ist in neuerungsgemässer Weise als Rootspumpe ausgebildet. Eine solche Pumpe ist ölfrei und zeichnet sich durch grosse Lebensdauer und grosse Durchsatzleistung aus, so dass die für die Desorption unter Vakuum notwendigen Abpumpzeiten klein gehalten werden können. Ein- oder mehrstufige zwischengekühlte Rootspumpen haben sich als besonders zweckmässig erwiesen. Auch vor Einlass gekühlte Rootspumpen dieser Art können in vorteilhafter Weise verwendet werden.

Infolge der Prozessführung entstehen für das Frischgasgebläse 16 und das Spülgebläse 14 unterschiedliche Druckverluste. Die Frisch- und Spülgase werden von oben oder unter eingegeben, wobei das Spülgas zunächst über den zu spülenden Adsorber geleitet und dann zusammen mit dem Frischgas in den in Adsorption befindlichen Behälter geleitet wird. An der Stelle, wo Frisch- und Spülgase in den Adsorber eintreten, muss deshalb Druckgleichheit der Eintrittsgase erreicht werden. Neuerungsgemäss wird deshalb vorgeschlagen, dass als Spülgebläse und als Luftgebläse jeweils ein Rootsgebläse vorgesehen sind. Da Rootsgebläse nur den Druck aufbauen, der ihnen als Widerstand entgegengebracht wird, kann durch den Einsatz der Rootsgebläse die Druckgleichheit ohne zusätzliche Regelung gewährleistet werden.

Vorrichtungen z. B. zur Erzeugung von Sauerstoff arbeiten in ähnlicher Weise. In bekannter Weise hängt es von der Art des verwendeten Adsorptionsmaterials ab, welches Gas mittels der neuerungsgemässen Vorrichtung erzeugt wird.

## Patentansprüche

1. Vorrichtung zur Trennung oder fraktionierenden Reinigung von Gasgemischen nach dem Druckwechsel-Prinzip mit mindestens zwei, vorzugsweise drei Adsorbern (1, 2, 3), die während ihrer Adsorptionsphase mit Überdruck und während ihrer Desorptionsphase mit Unterdruck betrieben werden und denen ein mit Ventilen (18) sowie Förder- und Vakuumpumpeinrichtungen (14, 16, 11) ausgerüstetes Leitungssystem zugeordnet ist, dadurch gekennzeichnet, dass die Förder- und Vakuumpumpeinrichtungen (14, 16, 11) als Rootsgebläse bzw. Rootspumpen ausgebildet sind, und dass die der Vakuumerzeugung dienenden Rootspumpen mit einer Vor- Einlass-Kühlung ausgerüstet sind.

2. Vorrichtung nach Anspruch 1, dadurch gekennzeichnet, dass die Vakuumpumpeinrichtungen (11) als mehrstufige zwischengekühlte Rootspumpen ausgebildet sind.

3. Vorrichtung nach Anspruch 1 oder 2, dadurch gekennzeichnet, dass die Ventile (18) als Klappventile oder Absperrklappen ausgebildet sind.

## Claims

1. A device for the separation or fractionated purification of gas mixtures by the pressure-change principle and comprising at least two, and preferably three, adsorbers (1, 2, 3) which, during their adsorption phase, are operated under excess pressure and, during their desorption phase, under reduced pressure, and with which is associated a piping system provided with valves (18) and conveyor and vacuum-pump means (14, 16, 11), characterized in that the conveyor and vacuumpump means (14, 16, 11) are formed as Root's blowers and Root's pumps respectively, and in that the Root's pumps used for setting up the vacuum are provided with upstream inlet-cooling means.

2. A device according to Claim 1, characterized in that the vacuum pump means (11) are designed as multi-stage intermediately cooled Root's pumps.

3. A device according to Claim 1 or 2, characterized in that the valves (18) are designed as clack valves or shut-off flaps.

## Revendications

1. Appareil de séparation ou de purification fractionnée de mélanges gazeux selon le principe de l'alternance ou de l'inversion de pression, comprenant au moins deux et de préférence trois adsorbeurs qui fonctionnent sous surpression pendant leur phase d'adsorption et sous dépression pendant leur phase de désorption et auxquels est conjugué un système de conduits équipé de soupapes ainsi que de dispositifs de refoulement et de pompage pour faire le vide, caractérisé en ce que les dispositifs de refoulement et de pompage pour faire le vide (14, 16, 11) sont des soufflantes ou des pompes de Roots et que les pompes de Roots servant à faire le vide sont pourvues d'un refroidissement avant l'admission.

2. Appareil selon la revendication 1, caractérisé en ce que les dispositifs de pompage (11) pour faire le vide sont des pompes de Roots à plusieurs étages à refroidissement intermédiaire.

3. Appareil selon la revendication 1 ou 2, caractérisé en ce que les soupapes (18) sont des soupapes à clapet ou des clapets d'arrêt.

0 038 410